# EUROPÄISCHE PATENTANMELDUNG

(11) **EP 4 647 470 A1**
(43) Veröffentlichungstag der Anmeldung: **12.11.2025**
(21) Anmeldenummer: 24174901.9
(22) Anmeldetag: 08.05.2024
(51) Int. Cl.: C09D 7/40, C09D 183/04

(54) **EPOXIDHARZ-BESCHICHTUNG MIT BEI DER ANWENDUNG ZUGEMISCHTEM BIOBASIERTEM GRANULAT**

(71) Anmelder: Sika Technology AG, 6340 Baar (CH)
(72) Erfinder: VIAS PARRADO, Ana, 70499 Stuttgart (DE); SUSSMANN, Uwe, 71638 Ludwigsburg (DE); NIETHAMMER, Matthias, 73079 Süssen (DE); SARIOGLU, Oguz, 74078 Heilbronn (DE); PUSEL, Thomas, 71282 Hemmingen (DE)
(74) Vertreter: Sika Patent Attorneys

(57) **Zusammenfassung**

Gegenstand der Erfindung ist eine Methode zur Applikation eines Bodenschutzsystems, umfassend die Schritte
(i) Vermischen der Komponenten einer Epoxidharz-Beschichtung,
(ii) Zugeben von mindestens einem biobasierten Granulat **G1** zur Epoxidharz-Beschichtung während oder nach Schritt (i),
(iii) Applizieren der flüssigen Epoxidharz-Beschichtung enthaltend das biobasierte Granulat **G1** auf eine Bodenfläche,
(iv) Aushärten der applizierten Beschichtung bei Umgebungsbedingungen, insbesondere bei einer Temperatur von 0 bis 40 °C, bevorzugt 5 bis 35 °C,
wobei das biobasierte Granulat **G1** eine Partikelgrössenverteilung von 0.1 bis 1 mm und einen volumenbasierten d⁵⁰-Wert von 0.2 bis 0.8 mm aufweist.

Das biobasierte Granulat **G1** ermöglicht eine sehr effiziente Erhöhung der Fliessgrenze bei geringer Einsatzmenge und neigt kaum zum Absetzen. Es ermöglicht eine ebenmässige Oberfläche weitgehend ohne Krater oder Poren. Das erhaltene Bodenschutzsystem verfügt über eine unverändert gute Beständigkeit gegenüber mechanischer Beanspruchung, Feuchtigkeit und Chemikalien und eine sehr gute Haftung auf dem Substrat und beim Überbeschichten.

## Beschreibung

### Technisches Gebiet

Die Erfindung betrifft das Gebiet der flüssig applizierten Epoxidharz-Bodenschutzsysteme.

### Stand der Technik

Bodenschutzsysteme auf Epoxidharz-Basis sind bekannt. Sie eignen sich insbesondere für Industriehallen, Brücken, Rampen oder Parkdecks, wobei die Böden vor mechanischer Beanspruchung, Reinigungsmitteln, Nässe und Tausalz geschützt werden. Zu deren Einbau wird eine flüssige Epoxidharz-Beschichtung in einer Schichtdicke von typischerweise etwa 0.3 bis 3 mm appliziert. Dabei kann die flüssige Epoxidharz-Beschichtung vor der Applikation mit zusätzlichem Quarzsand verfüllt werden. Das Verfüllen dient dazu, eine für die gewünschte Applikation zu dünnflüssige Konsistenz zu verdicken, beispielsweise weil die zu beschichtende Bodenfläche geneigt ist, oder weil die Bodenfläche sehr uneben ist und darin Löcher oder Spalten gefüllt werden sollen, oder weil die Umgebungstemperatur bei der Applikation so hoch ist, dass die Beschichtung zu dünnflüssig ist. Durch das zusätzliche Verfüllen wird eine höhere Viskosität und Fliessgrenze bei der Applikation erreicht, so dass die applizierte Beschichtung in der gewünschten Schichtdicke verbleibt und nicht zu stark wegfliesst.

Das Verfüllen mit Quarzsand weist aber auch Nachteile auf. Oft genügt es nicht, die Epoxidharz-Beschichtung mit zusätzlichem Quarzsand zu verfüllen, um die gewünschte Erhöhung der Fliessgrenze zu erreichen, sondern es muss ein zusätzlicher Verdicker wie zum Beispiel Kunststofffasern als sogenanntes Stellmittel zugegeben werden, damit der Quarzsand beim Applizieren der Beschichtung nicht zu stark absetzt und dadurch die verdickende Wirkung teilweise verloren geht. Zudem ist Quarzsand ein knapper Rohstoff, welcher nur begrenzt zur Verfügung steht.

Biobasierte Granulate wie beispielsweise Olivenkernmehl sind ökologisch interessante Materialien aus nachwachsenden Quellen. Insbesondere stammen sie aus landwirtschaftlichen Abfällen. Sie werden insbesondere eingesetzt in Produkten für die Körperpflege, im Gartenbau oder in Composite-Materialien.

WO 2024/027960 beschreibt Epoxidharz-Beschichtungen enthaltend ein biobasiertes Granulat mit einer Partikelgrösse ≤ 200 µm, welches Teil der Harz- und/oder der Härter-Komponente ist.

### Darstellung der Erfindung

Aufgabe der vorliegenden Erfindung ist es, eine Methode zum Verfüllen einer Epoxidharz-Beschichtung bei der Applikation zur Verfügung zu stellen, welche die Nachteile des Standes der Technik überwindet und Bodenschutzsysteme von hoher Härte und Beständigkeit ermöglicht.

Überraschenderweise wird diese Aufgabe mit der Methode zur Applikation eines Bodenschutzsystems gemäss Anspruch 1 gelöst. Dabei wird ein biobasiertes Granulat **G1** mit einer Partikelgrössenverteilung von 0.1 bis 1 mm und einem volumenbasierten d⁵⁰-Wert von 0.2 bis 0.8 mm zum Verfüllen einer flüssig applizierten Epoxidharz-Beschichtung eingesetzt, insbesondere ein Olivenkernmehl. Die Verwendung eines solchen biobasierten Granulats weist zahlreiche Vorteile gegenüber dem Stand der Technik auf. Das biobasierte Granulat **G1** ist insbesondere ein nachwachsendes Abfallprodukt aus einer landwirtschaftlichen Quelle. Es ermöglicht überraschenderweise bei einer geringen Einsatzmenge eine sehr effiziente Erhöhung der Fliessgrenze, ohne dass zusätzliche Verdicker oder sogenannte Stellmittel wie zum Beispiel Kunststofffasern benötigt werden. Weiter zeigt das biobasierte Granulat **G1** nur eine geringe Neigung zum Absetzen. Dadurch ist die verfüllte Beschichtung besonders einfach und in hoher Qualität applizierbar. Und nach der Aushärtung wird eine überraschend ebenmässige Oberfläche weitgehend ohne Krater oder Poren erhalten.

Der Einsatz eines zu feinkörnigen biobasierten Granulats führt zu einem ungenügenden Verlauf und einer unebenen Oberfläche, während ein zu grobkörniges biobasiertes Granulat eher zum Absetzen neigt und eine unebene Oberfläche bewirkt.

Das erhaltene Bodenschutzsystem verfügt über eine unverändert gute Beständigkeit gegenüber mechanischer Beanspruchung, Feuchtigkeit und Chemikalien und über eine sehr gute Haftung, sowohl auf dem Untergrund als auch beim Abstreuen mit einem weiteren Granulat und/oder beim Überbeschichten mit einer weiteren Beschichtung, insbesondere einer Epoxidharz-Versiegelung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Methode zur Applikation eines Bodenschutzsystems, umfassend die Schritte
(i) Vermischen der Komponenten einer Epoxidharz-Beschichtung,
(ii) Zugeben von mindestens einem biobasierten Granulat **G1** zur Epoxidharz-Beschichtung während oder nach Schritt (i),
(iii) Applizieren der flüssigen Epoxidharz-Beschichtung enthaltend das biobasierte Granulat **G1** auf eine Bodenfläche,
(iv) Aushärten der applizierten Beschichtung bei Umgebungsbedingungen, insbesondere bei einer Temperatur von 0 bis 40 °C, bevorzugt 5 bis 35 °C,
wobei das biobasierte Granulat **G1** eine Partikelgrössenverteilung von 0.1 bis 1 mm und einen volumenbasierten d⁵⁰-Wert von 0.2 bis 0.8 mm aufweist, bestimmt mittels Siebanalyse nach DIN 66165 (2016).

Als "Olivenkern" oder "Olivenkernschalen" wird im vorliegenden Dokument insbesondere der Rückstand aus Olivenkernschalen nach dem Auspressen oder Extrahieren des Öls aus den Oliven bezeichnet. Ebenso werden als "Cashewnussschalen" im vorliegenden Dokument insbesondere die übrigbleibenden Schalenbruchstücke der Cashewnüsse nach dem Auspressen oder Extrahieren des Cashewnussschalenöls aus den harten Schalen bezeichnet.

Als "lagerstabil" wird eine Zusammensetzung bezeichnet, die bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Versiegelung" wird die oberste Schicht einer Bodenbeschichtung bezeichnet (Top Coat).

Mit "Poly" beginnende Substanznamen wie Polyepoxid oder Polyamin bezeichnen Substanzen, die formal zwei oder mehr der in ihrem Namen vorkommenden funktionellen Gruppen pro Molekül enthalten.

Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Mol-Equivalent Aminwasserstoff enthält, bezeichnet.

Als "primäre Amingruppe" wird eine Amingruppe bezeichnet, die an einen einzigen organischen Rest gebunden ist und zwei Wasserstoffatome trägt; als "sekundäre Amingruppe" wird eine Amingruppe bezeichnet, die an zwei organische Reste, welche auch gemeinsam Teil eines Rings sein können, gebunden ist und ein Wasserstoffatom trägt; und als "tertiäre Amingruppe" wird eine Amingruppe bezeichnet, die an drei organische Reste, welche auch zu zweit oder zu dritt Teil eines oder mehrerer Ringe sein können, gebunden ist und kein Wasserstoffatom trägt. Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet. Es wird mittels Gelpermeationschromatographie (GPC) gegen Polystyrol als Standard bestimmt.

Als "Verdünner" wird eine Flüssigkeit bezeichnet, welche die Viskosität einer härtbaren Zusammensetzung zu senken vermag und bei der Aushärtung chemisch nicht ins Polymer eingebunden wird.

Gewichtsprozente (Gewichts-%) bezeichnen Massenanteile eines Bestandteils einer Zusammensetzung bezogen auf die gesamte Zusammensetzung, falls nichts anderes angeben. Die Begriffe "Masse" und "Gewicht" werden im vorliegenden Dokument synonym benutzt.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen.

In Schritt (i) der erfindungsgemässen Methode werden die Komponenten einer Epoxidharz-Beschichtung miteinander vermischt.

Bevorzugt umfasst die Epoxidharz-Beschichtung eine Harz-Komponente und eine Härter-Komponente, welche jeweils getrennt voneinander lagerstabil sind und für die Applikation in Schritt (i) miteinander vermischt werden.

Bevorzugt sind die Harz- und die Härter-Komponente bei Raumtemperatur flüssig.

Bevorzugt enthält die Harz-Komponente mindestens ein Epoxid-Flüssigharz.

Bevorzugt als Epoxid-Flüssigharz sind bei Raumtemperatur flüssige, aromatische Polyepoxide mit einem mittleren Epoxid-Equivalentgewicht von 156 bis 210 g/eq.

Besonders bevorzugt ist ein Bisphenol A-Diglycidylether, ein Bisphenol F-Diglycidylether und/oder ein Bisphenol A/F-Diglycidylether, wie sie kommerziell beispielsweise von Huntsman, Dow oder Hexion erhältlich sind.

Weiterhin besonders bevorzugt ist ein Bisphenol A-Diglycidylether aus der Umsetzung von Bisphenol A mit biobasiertem Epichlorhydrin. Dies ermöglicht besonders nachhaltige Epoxidharz-Beschichtungen.

Weiterhin besonders bevorzugt sind Phenol-Formaldehyd Novolak-Glycidylether, insbesondere mit einer mittleren Funktionalität von 2.3 bis 3.

Weiterhin besonders bevorzugt sind Diglycidylether von Vanillinalkohol. Solche Epoxidharz-Beschichtungen sind besonders nachhaltig.

Bevorzugt umfasst die Harz-Komponente mindestens einen Epoxidgruppen-haltigen Reaktivverdünner.

Geeignete Epoxidgruppen-haltige Reaktivverdünner sind insbesondere Butandioldiglycidylether, Hexandioldiglycidylether, Trimethylolpropantriglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Vanillinglycidylether, Cardanolglycidylether, Benzylglycidylether, Allylglycidylether, Butylglycidylether, Hexylglycidylether, 2-Ethylhexylglycidylether oder Glycidylether von natürlichen Alkoholen wie insbesondere C₈₋₁₀- oder C₁₂₋₁₄- oder C₁₃₋₁₅-Alkylglycidylether.

Bevorzugt sind Glycidylether von natürlichen Alkoholen, insbesondere ein C₁₂₋₁₄-Alkylglycidylether. Solche Epoxidharz-Beschichtungen sind besonders gut verarbeitbar.

Bevorzugt umfasst die Harz-Komponente einen Gehalt an Epoxidgruppen-haltigen Reaktivverdünnern von 5 bis 30 Gewichtsteilen, insbesondere 10 bis 25 Gewichtsteilen, bezogen auf 100 Gewichtsteile Epoxid-Flüssigharz.

Gegebenenfalls enthält die Harz-Komponente zusätzlich Anteile von Epoxid-Festharz.

Bevorzugt enthält die Härter-Komponente der Epoxidharz-Beschichtung mindestens ein Polyamin mit mindestens drei Aminwasserstoffen.

Geeignet sind insbesondere aliphatische, cycloaliphatische oder arylaliphatische Polyamine, insbesondere ausgewählt aus der Gruppe bestehend aus 2,2(4),4-Trimethylhexamethylendiamin (TMD), 1,2-Diaminocyclohexan, Isophorondiamin (IPDA), 1,3-Bis(aminomethyl)cyclohexan, 1,4-Bis(aminomethyl)cyclohexan, 2(4)-Methyl-1,3-diaminocyclohexan, 2,5(2,6)-Bis(aminomethyl)bicyclo[2.2.1]heptan (NBDA), Bis(4-aminocyclohexyl)methan, 1,3-Bis(aminomethyl)benzol (MXDA), N-Benzyl-1,2-ethandiamin, N-Furfuryl-1,2-ethandiamin, N-Tetrahydrofurfuryl-1,2-ethandiamin, Phenalkaminen, Polyoxypropylendiaminen mit mittlerem Molekulargewicht Mₙ von 200 bis 500 g/mol, Polyoxypropylentriaminen mit mittlerem Molekulargewicht Mₙ von 300 bis 500 g/mol, Triethylentetramin (TETA), Tetraethylenpentamin (TEPA), Pentaethylenhexamin (PEHA), N,N'-Bis(3-aminopropyl)ethylendiamin (N4-Amin) und Reaktionsprodukten aus der reduktiven Alkylierung von N4-Amin, DETA und TETA mit Benzaldehyd und Wasserstoff.

Davon bevorzugt sind IPDA, 1,3-Bis(aminomethyl)cyclohexan, MXDA, N-Benzyl-1,2-ethandiamin, Phenalkamine, Polyoxypropylendiamine mit mittlerem Molekulargewicht Mₙ von 200 bis 300 g/mol, Reaktionsprodukte aus der reduktiven Alkylierung von N4-Amin, DETA oder TETA mit Benzaldehyd und Wasserstoff, sowie Mischungen aus zwei oder mehr dieser Polyamine.

Besonders bevorzugt ist IPDA. IPDA ermöglicht eine hohe Glasumwandlungstemperatur der ausgehärteten Beschichtung und wenig Neigung zum Vergilben. Besonders bevorzugt ist weiterhin 1,3-Bis(aminomethyl)cyclohexan. 1,3-Bis(aminomethyl)cyclohexan ermöglicht eine besonders schnelle Aushärtung und besonders wenig Neigung zum Vergilben der ausgehärteten Beschichtung.

Besonders bevorzugt ist weiterhin MXDA. MXDA ermöglicht eine besonders schnelle Aushärtung.

Besonders bevorzugt ist weiterhin N-Benzyl-1,2-ethandiamin. N-Benzyl-1,2-ethan-diamin ermöglicht eine besonders gute Verarbeitbarkeit mit gutem Verlauf bei schneller Aushärtung und wenig Neigung zu Oberflächenstörungen durch Blushing bei der Aushärtung.

Die Epoxidharz-Beschichtung kann weitere Bestandteile enthalten, insbesondere
- Beschleuniger wie insbesondere 2,4,6-Tris(dimethylaminomethyl)phenol, Salicylsäure, Calciumnitrat oder Phenol-Novolak-Harze,
- weitere Amine, insbesondere Addukte der erwähnten Polyamine mit Mono- oder Diepoxiden, N,N'-Dibenzyl-1,2-ethandiamin, Phenalkamide oder aromatische Polyamine,
- Verdünner, insbesondere Verdünner mit einem Siedepunkt bei Normaldruck von mindestens 200 °C, insbesondere Benzylalkohol, 2-Phenoxyethanol, Cardanol, styrolisiertes Phenol, Diisopropylnaphthalin oder Isopropylbiphenyle,
- Füllstoffe wie insbesondere biobasierte Granulate, gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Titandioxid, Eisenoxide, Molekularsieb, Aluminiumoxid, Aluminiumhydroxid, Magnesiumhydroxid, Kieselsäure, oder Hohlkugeln,
- Nanofüllstoffe, insbesondere Carbon Nanotubes;
- Farbstoffe oder Pigmente,
- Lösemittel;
- Rheologie-Modifizierer, insbesondere Verdicker oder Antiabsetzmittel,
- Haftverbesserer, insbesondere Organoalkoxysilane,
- flammhemmende Substanzen, insbesondere die bereits genannten Füllstoffe Aluminiumhydroxid oder Magnesiumhydroxid, oder Phosphate wie insbesondere Diphenylkresylphosphat,
- Additive wie insbesondere Netzmittel, Verlaufmittel, Entschäumer, Entlüfter, Stabilisatoren gegen Oxidation, Wärme, Licht oder UV-Strahlung, oder Biozide.

Solche weitere Bestandteile der Epoxidharz-Beschichtung können als Bestandteil der Harz- und/oder der Härter-Komponente vorhanden sein, wobei Beschleuniger und weitere Amine bevorzugt als Bestandteil der Härter-Komponente vorliegen.

Bevorzugt enthält die Epoxidharz-Beschichtung mindestens einen Beschleuniger, insbesondere 2,4,6-Tris(dimethylaminomethyl)phenol.

Bevorzugt enthält die Epoxidharz-Beschichtung mindestens einen Füllstoff, insbesondere ausgewählt aus biobasierten Granulaten, Calciumcarbonaten, Baryt, Talk und Quarzmehl, sowie mindestens ein Pigment, insbesondere ein Titandioxid. Bevorzugt enthält die Epoxidharz-Beschichtung mindestens einen Verdünner. Bevorzugt enthält die Epoxidharz-Beschichtung mindestens ein Additiv, insbesondere ausgewählt aus Netzmitteln, Verlaufmitteln, Entschäumern und Entlüftern.

In einer bevorzugten Ausführungsform der Erfindung enthält die Epoxidharz-Beschichtung als Bestandteil der Harz- und/oder der Härter-Komponente mindestens ein biobasiertes Granulat **G2** mit einem Ligningehalt von mindestens 15 Gewichts- % und einer Partikelgrösse ≤ 0.2 mm, bevorzugt ≤ 0.1 mm, insbesondere ein Olivenkernmehl, insbesondere als Bestandteil der Harz- und/oder der Härter-Komponente. Eine solche Beschichtung ist besonders nachhaltig und sehr gut geeignet, um bei der Applikation mit einem biobasierten Granulat **G1** zusätzlich verfüllt zu werden.

In Schritt (i) der erfindungsgemässen Methode werden die Komponenten der Epoxidharz-Beschichtung miteinander vermischt. Insbesondere werden die Harz- und die Härter-Komponente miteinander vermischt.

Das Mischungsverhältnis der Komponenten wird bevorzugt so gewählt, dass das Verhältnis der Anzahl gegenüber Epoxidgruppen reaktiven Gruppen, insbesondere der Aminwasserstoffe, zur Anzahl Epoxidgruppen im Bereich von 0.5 bis 1.5, bevorzugt 0.7 bis 1.2, liegt. In Gewichtsteilen liegt das Mischungsverhältnis zwischen der Harz- und der Härter-Komponente typischerweise im Bereich von etwa 1:1 bis 10:1.

Das Vermischen der Komponenten kann kontinuierlich oder batchweise erfolgen, insbesondere bei Umgebungstemperatur. Ein batchweises Vermischen erfolgt bevorzugt mit einem handelsüblichen Rührwerk, insbesondere mit einer Bohrmaschine mit aufgesetztem Propeller- oder Wendelrührer, bis eine makroskopisch homogene flüssige Masse erhalten wird.

Bevorzugt sind die Harz- und die Härter-Komponente im vorgegebenen Mischungsverhältnis in je einem Gebinde vorkonfektioniert.

Mit dem Vermischen der Komponenten beginnt die Aushärtung der Epoxidharz-Beschichtung durch chemische Reaktion. Dabei reagieren Aminwasserstoffe mit Epoxidgruppen unter deren Ringöffnung (Additionsreaktion). Als Ergebnis hauptsächlich dieser Reaktion polymerisiert die Beschichtung und härtet dadurch aus.

Das Zugeben des biobasierten Granulats **G1** in Schritt (ii) und das Applizieren in Schritt (iii) erfolgen insbesondere innerhalb der Zeitspanne ab dem Mischen der Harz- und der Härter-Komponente, in welcher die Beschichtung noch nicht geliert und ausreichend fliessfähig für Schritt (iii) ist.

In Schritt (ii) wird während oder nach Schritt (i) mindestens ein biobasiertes Granulat **G1** zur Epoxidharz-Beschichtung zugegeben.

Bevorzugt wird in Schritt (ii) bezogen auf 100 Gewichtsteile Epoxidharz-Beschichtung 10 bis 40 Gewichtsteile, bevorzugt 15 bis 30 Gewichtsteile, biobasiertes Granulat **G1** zugegeben.

In einer bevorzugten Ausführungsform der Erfindung wird das biobasierte Granulat **G1** während Schritt (i) zugegeben. Dabei werden insbesondere die Harz- und die Härter-Komponente zusammen mit dem biobasierten Granulat **G1** in einem Arbeitsgang vermischt, wie vorgängig für das Vermischen der Harz- und der Härter-Komponente beschrieben, bis eine makroskopisch homogene, flüssige bis pastöse Masse erhalten wird.

In einer weiteren bevorzugten Ausführungsform der Erfindung wird das biobasierte Granulat **G1** nach Schritt (i) zugegeben. Dabei wird das biobasierte Granulat **G1** zur bereits vermischten, noch flüssigen Epoxidharz-Beschichtung zugegeben und mit dieser vermischt, insbesondere wie vorgängig für das Vermischen der Harz- und der Härter-Komponente beschrieben. Dieses Vorgehen wird typischerweise dann gewählt, wenn nach dem Vermischen der Harz- und der Härter-Komponente festgestellt wird, dass die vermischte Beschichtung zu dünnflüssig für die gewünschte Applikation ist, oder wenn die benötigte Menge des biobasierten Granulats **G1** noch unsicher ist und mehrere Portionen des Granulats bis zum gewünschten Grad der Verdickung eingemischt werden sollen.

Weiterhin bevorzugt ist das Einmischen einer ersten Portion des biobasierten Granulats **G1** in Schritt (i), gefolgt von Zumischen einer oder mehrerer weiterer Portionen Granulat **G1** nach Schritt (i), bis der gewünschte Grad der Verdickung erreicht ist.

Das Zumischen eines Granulats bei der Applikation einer Epoxidharz-Beschichtung wird auch als "Verfüllen" bezeichnet. Es wird durgeführt, um die Viskosität und/oder die Fliessgrenze der Epoxidharz-Beschichtung bei der Applikation zu erhöhen.

Dies kann erfolgen, um eine pastöse Konsistenz bei der Applikation zu erreichen um im Substrat Löcher oder Spalten zu füllen oder Unebenheiten auszugleichen. Eine solche verdickte Epoxidharz-Beschichtung wird auch als Kratzspachtel bezeichnet.

Weiterhin vorteilhaft ist das Verfüllen, wenn die Epoxidharz-Beschichtung auf eine geneigte Fläche appliziert werden soll, beispielsweise auf eine Rampe, eine abschüssigen Bodenfläche oder im Randbereich an eine Wand oder Stufe hochgezogen werden soll.

Weiterhin vorteilhaft ist das Verfüllen, wenn die Epoxidharz-Beschichtung bei einer hohen Umgebungstemperatur verarbeitet wird, wobei die Viskosität temperaturbedingt stark erniedrigt ist und der Verlauf mittels dem Verfüllen optimiert wird.

Das biobasierte Granulat **G1** weist bevorzugt einen Ligningehalt von mindestens 10 Gewichts-%, bevorzugt mindestens 15 Gewichts-%, insbesondere mindestens 20 Gewichts-%, auf. Ein solches Granulat **G1** ermöglicht eine hohe Härte und Robustheit der applizierten Epoxidharz-Beschichtung.

Das biobasierte Granulat **G1** ist bevorzugt ein Abfallprodukt von landwirtschaftlichen Erzeugnissen, insbesondere Nahrungsmitteln wie insbesondere Ölen, Nüssen oder Samen, wobei nicht essbare Anteile in Form von Schalen, Hülsen oder Kernen aus verholztem Material anfallen. Diese werden bevorzugt für die erfindungsgemässe Verwendung aufbereitet und auf die gewünschte Partikelgrössenverteilung gemahlen und gegebenenfalls weiter behandelt, insbesondere getrocknet oder gesiebt.

Das biobasierte Granulat **G1** ist insbesondere ausgewählt ist aus der Gruppe bestehend aus gemahlenen Olivenkernschalen, Kokosnussschalen, Mandelschalen, Walnussschalen, Pecannussschalen, Paranussschalen, Haselnussschalen, Macadamianussschalen, Cashewnussschalen, Pistazienschalen, Kakaofruchtschalen, Aprikosenkernschalen, Pfirsichkernschalen und Zwetschgenkernschalen.

Am meisten bevorzugt ist das biobasierte Granulat **G1** ein Granulat aus Olivenkernschalen. Ein solches Granulat wird auch als Olivenkernmehl bezeichnet. Es ist in hoher Menge und guter Qualität verfügbar und ermöglicht bei geringer Einsatzmenge eine effektive Verdickung ohne Absetzen bei gutem Verfliessen der applizierten Beschichtung vor dem Erhärten. Dadurch wird eine ebenmässige Oberfläche ohne Poren und Inhomogenitäten erreicht.

Bevorzugt weist das biobasierte Granulat **G1** eine Partikelgrössenverteilung von 0.1 bis 0.5 mm und einen volumenbasierten d⁵⁰-Wert von 0.2 bis 0.4 mm, insbesondere einen volumenbasierten d⁵⁰-Wert von 0.2 bis 0.35 mm, auf. Ein zu feines Granulat bewirkt eine zu starke Verdickung mit ungenügendem Verlauf. Ein zu grobes Granulat neigt zum Absetzen und bewirkt eine unebene Oberfläche.

Bevorzugt weist das biobasierte Granulat **G1** einen Feuchtigkeitsgehalt von weniger als 15 Gewichts-% auf.

In Schritt (iii) der erfindungsgemässen Methode wird die flüssige Epoxidharz-Beschichtung enthaltend das biobasierte Granulat **G1** auf eine Bodenfläche appliziert.

Bevorzugt weist die Epoxidharz-Beschichtung enthaltend das biobasierte Granulat **G1** in Schritt (iii) eine Viskosität bei 20 °C von 0.5 bis 25 Pa s, bevorzugt 1 bis 10 Pa s, auf, gemessen mittels Platte-Platte Viskosimeter mit Plattendurchmesser 50 mm, Platte-Platte-Abstand 0.5 mm und Scherrate 100 s⁻¹.

Als Bodenfläche geeignet sind insbesondere Böden, welche durch das Bodenschutzsystem vor mechanischer Beanspruchung und/oder der Einwirkung von Nässe, Tausalz, Reinigungsmitteln oder weiteren Flüssigkeiten geschützt werden sollen. Dies sind insbesondere die Böden von Brücken, Rampen, Treppen, Terrassen, Balkonen, Parkdecks, Garagen, Parkhäusern, Industriehallen oder Lagerhallen.

Die Bodenfläche, auf welche die Beschichtung in Schritt (iii) appliziert wird, besteht insbesondere aus Mörtel, Beton, Naturstein, Keramik, Holz oder einem Kunststoff, bevorzugt aus Mörtel oder Beton, insbesondere einem sogenannten Estrichmörtel. Dabei kann die Beschichtung in Schritt (iii) direkt auf die Bodenfläche appliziert werden, oder es wird vor Schritt (iii) ein Primer oder eine Grundierung appliziert, insbesondere ein Primer oder eine Grundierung auf Epoxidharz-Basis.

Die Bodenfläche ist bevorzugt von Sand oder Staub befreit und wurde gegebenenfalls vorgängig abgeschliffen oder sandgestrahlt.

Weiterhin bevorzugt ist die Applikation der Beschichtung in Schritt (iii) auf eine Bodenfläche, welche bereits mit einer älteren Beschichtung, insbesondere einer Epoxidharz-Beschichtung, beschichtet ist. Dabei wird insbesondere eine abgenutzte oder schadhafte Beschichtung mittels des erfindungsgemässen Bodenschutzsystems neu beschichtet bzw. repariert. Vor der Durchführung von Schritt (iii) wurde die Bodenfläche bevorzugt gereinigt und von Staub befreit. Gegebenenfalls wurde die alte Beschichtung zumindest teilweise abgeschliffen.

Bevorzugt wird die Beschichtung in Schritt (iii) in einer Menge von 0.2 bis 3 kg/m², bevorzugt 0.3 bis 2 kg/m², appliziert.

Bevorzugt wird die Beschichtung in Schritt (iii) in einer Schichtdicke von 0.1 bis 5 mm, bevorzugt 0.3 bis 3 mm, appliziert.

Die Applikation der Beschichtung in Schritt (iii) erfolgt bevorzugt als selbstverlaufende oder leicht thixotropierte Beschichtung auf eine ebene oder leicht geneigte Fläche, insbesondere durch Aufgiessen auf die Bodenfläche und anschliessendem gleichmässigem Verteilen mit beispielsweise einem Pinsel, einer Rolle, einer Walze, einer Rakel oder einer Zahntraufel. Die Applikation kann auch als Spritzapplikation erfolgen. Weiterhin kann die Applikation auch als Kratzspachtel erfolgen, insbesondere zum Ausgleichen von Unebenheiten, zum Füllen von Löchern oder Spalten im Substrat, oder zum Hochziehen im Randbereich. Als Kratzspachtel wird die Beschichtung insbesondere mittels einem Spachtel appliziert.

Nach der Applikation erfolgt in Schritt (iv) die Aushärtung der applizierten Beschichtung bei Umgebungsbedingungen, insbesondere bei einer Temperatur von 0 bis 40 °C, bevorzugt 5 bis 35 °C. Die für die Aushärtung benötigte Zeit ist abhängig von der Umgebungstemperatur und den in der Beschichtung vorhandenen Inhaltsstoffen.

Die ausgehärtete Beschichtung kann mit einer weiteren Epoxidharz-Beschichtung überbeschichtet werden, beispielsweise mit einer weiteren Schicht der Epoxidharz-Beschichtung, welche gegebenenfalls ebenfalls mit zusätzlichem biobasiertem Granulat **G1** verfüllt ist, oder mit einer beliebigen anderen Epoxidharz-Beschichtung, insbesondere mit einer sogenannten Epoxidharz-Versiegelung.

In einer bevorzugten Ausführungsform der Erfindung wird die in Schritt (iii) applizierte Beschichtung im noch flüssigen Zustand mit mindestens einem weiteren Granulat abgestreut. Dazu geeignet ist insbesondere ein Quarzsand oder ein biobasiertes Granulat.

Bevorzugt wird ein solches Granulat im Überschuss auf die noch flüssige Beschichtung gestreut, insbesondere manuell durch Werfen des Granulats über die applizierte Beschichtung. Nach der Aushärtung wird überschüssiges, nicht in die ausgehärtete Beschichtung eingebundenes Granulat mechanisch entfernt, insbesondere mittels Besen, Bürste und/oder Staubsauger. So wird schliesslich eine körnige Oberfläche erhalten, welche eine gute Rutschhemmung des Bodenschutzsystems ermöglicht. Bevorzugt wird eine solche Oberfläche anschliessend mit einer Epoxidharz-Versiegelung überbeschichtet. Ein solches rutschhemmendes Bodenschutzsystem ist besonders geeignet für Brücken, Rampen oder Parkdecks.

Bevorzugt zum Abstreuen ist ein biobasiertes Granulat oder ein Quarzsand. Besonders bevorzugt ist ein biobasiertes Granulat **G3** mit einer Partikelgrössenverteilung von 0.2 bis 2 mm, insbesondere 0.2 bis 1.5 mm, einen volumenbasierten d⁵⁰-Wert von 0.3 bis 1.3 mm, insbesondere 0.4 bis 1.1 mm, und einem Ligningehalt von mindestens 15 Gewichts-%, insbesondere mindestens 20 Gewichts- %, insbesondere ein Olivenkernmehl. Damit wird eine besonders ebenmässige rutschhemmende Oberfläche mit überraschend hoher Abrasionsbeständigkeit erhalten.

In Schritt (iv) erfolgt die Aushärtung der applizierten Beschichtung bei Umgebungsbedingungen, insbesondere bei einer Temperatur von 0 bis 40 °C, bevorzugt 5 bis 35 °C. Die für die Aushärtung benötigte Zeit ist abhängig von der Umgebungstemperatur und den in der Epoxidharz-Beschichtung vorhandenen Inhaltsstoffen.

Typischerweise ist die Epoxidharz-Beschichtung nach einer Wartezeit von etwa 4 bis 24 Stunden soweit ausgehärtet, dass sie begehbar ist. Bei sehr kalten Umgebungsbedingungen kann dies auch länger dauern, zum Beispiel bis zu 48 Stunden.

Bevorzugt wird die in Schritt (iv) erhaltene ausgehärtete Beschichtung mit mindestens einer weiteren Epoxidharz-Beschichtung überbeschichtet, insbesondere mit einer Epoxidharz-Versiegelung, insbesondere in einer Menge von 0.3 bis 1.3 kg/m², bevorzugt 0.5 bis 1.1 kg/m².

Als Epoxidharz-Versiegelung kann die bereits beschriebene Epoxidharz-Beschichtung eingesetzt werden. Dabei kann die Epoxidharz-Versiegelung die gleiche Zusammensetzung wie die Epoxidharz-Beschichtung aus Schritt (i) aufweisen, oder sie kann eine andere Zusammensetzung aufweisen, wobei die bereits für die Epoxidharz-Beschichtung erwähnten Inhaltsstoffe geeignet und bevorzugt sind. Insbesondere umfasst die Epoxidharz-Versiegelung eine Harz-Komponente und eine Härter-Komponente, welche separat gelagert werden und vor oder während der Applikation miteinander vermischt werden. Dabei umfasst die Harz-Komponente bevorzugt mindestens ein Epoxid-Flüssigharz, und die Härter-Komponente umfasst bevorzugt mindestens ein Polyamin mit mindestens drei Aminwasserstoffen. Die Applikation der Epoxidharz-Versiegelung erfolgt bevorzugt mittels Rakel, Rolle, Walze oder Pinsel. Besonders bevorzugt erfolgt die Applikation mittels einer Rolle.

Ein weiterer Gegenstand der Erfindung ist ein Bodenschutzsystem, erhalten aus der Methode wie vorgängig beschrieben.

Das Bodenschutzsystem umfasst bevorzugt
- gegebenenfalls mindestens eine Epoxidharz-Grundierung,
- die Epoxidharz-Beschichtung enthaltend das biobasierte Granulat **G1,**
- gegebenenfalls mindestens ein weiteres Granulat, welches auf die Epoxidharz-Beschichtung enthaltend das biobasierte Granulat **G1** gestreut wurde, insbesondere ein biobasiertes Granulat **G3,** und
- gegebenenfalls eine Epoxidharz-Versiegelung.

Insbesondere umfasst das Bodenschutzsystem
- gegebenenfalls mindestens eine Epoxidharz-Grundierung,
- die Epoxidharz-Beschichtung enthaltend das biobasierte Granulat **G1,** und
- mindestens eine Epoxidharz-Versiegelung.

Zwischen der Epoxidharz-Beschichtung enthaltend das biobasierte Granulat **G1** und der Epoxidharz-Versiegelung können eine oder mehrere weitere Schichten eine Epoxidharz-Beschichtung vorhanden sein.

Für den Fall, dass das Bodenschutzsystem zur Ruschhemmung mit einem weiteren Granulat abgestreut ist, befindet sich das zum Abstreuen benutzte Granulat bevorzugt direkt unter der Versiegelung, wurde also in die noch flüssige Beschichtung eingestreut, welche sich direkt unter der Versiegelung befindet.

Die Schichtdicke der Epoxidharz-Beschichtung enthaltend das biobasierte Granulat **G1** beträgt bevorzugt 0.1 bis 5 mm, bevorzugt 0.3 bis 3 mm.

Die Schichtdicke der Epoxidharz-Versiegelung beträgt bevorzugt 0.1 bis 1 mm.

Das erfindungsgemässe Bodenschutzsystem verfügt über eine sehr gute Haftung auf dem Substrat und zwischen den Schichten, sowie über eine hohe Beständigkeit gegenüber Abrasion und der Einwirkung von Nässe, Tausalz und Reinigungsmitteln. Zudem verfügt es über eine optisch ansprechende, ebenmässige Oberfläche weitgehend ohne Poren.

Ein weiterer Gegenstand der Erfindung ist die Verwendung des erfindungsgemässen Bodenschutzsystems auf Brücken, Rampen, Treppen, Terrassen, Balkonen oder Parkdecks, oder in Garagen, Parkhäusern, Industriehallen oder Lagerhallen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

Die volumenbasierten d⁵⁰-Werte wurden bestimmt mittels Siebanalyse nach DIN 66165 (2016).

### verwendete Granulate:

| | |
|---|---|
| Olivenkernmehl ≤ 0.1 mm | Olivenkernschalen aus der Gewinnung von Oliven- öl, getrocknet, gemahlen, Partikelgrösse ≤ 0.1 mm (von Micronizados Vegetales S.L) |
| Olivenkernmehl 0.1-0.3 mm | Olivenkernschalen aus der Gewinnung von Oliven-öl, getrocknet, gemahlen, Ligningehalt > 20 Gew.- %, Partikelgrösse 0.1 bis 0.3 mm, d⁵⁰ (Volumen) 0.2 mm (von Micronizados Vegetales S.L) |
| Olivenkernmehl 0.3-0.6 mm | Olivenkernschalen aus der Gewinnung von Oliven-öl, getrocknet, gemahlen, Partikelgrösse 0.3 bis 0.6 mm, d⁵⁰ (Volumen) 0.4 mm (von Micronizados Vegetales S.L) |
| Olivenkernmehl 0.3-0.8 mm | Olivenkernschalen aus der Gewinnung von Oliven-öl, getrocknet, gemahlen, Partikelgrösse 0.3 bis 0.8 mm, d⁵⁰ (Volumen) 0.5 mm (von Micronizados Vegetales S.L) |
| Quarzmehl 0.1-0.3 mm | Sika Quarzsand F34, Partikelgrösse 0.1 bis 0.3 mm (von Sika) |

### verwendete Epoxidharz-Beschichtung:

### Beschichtung E1:

Harz-Komponente enthaltend Bisphenol A- und A/F-Diglycidylether, Monoalkoholglycidylether, Diisopropylnaphthalin, Additive und ca. 20 Gew.% Olivenkernmehl ≤ 0.1 mm bezogen auf das Gesamtgewicht der Harz-Komponente.

Härter-Komponente enthaltend Isophorondiamin, 1,3-Bis(aminomethyl)benzol, N-Benzyl-1,2-ethandiamin, 2,4,6-Tris(dimethylaminomethyl)phenol und Benzylalkohol.

Das Mischungsverhältnis (in Gewicht) zwischen der Harz- und der Härter-Komponente war 76/24.

### Applikation von Bodenschutzsystemen:

### Beispiel 1:

3.8 kg Harz-Komponente und 1.2 kg Härter-Komponente der Beschichtung **E1** wurden zusammen mit 1.0 kg Olivenkernmehl 0.1-0.3 mm (d⁵⁰ 0.2 mm) mittels einer Bohrmaschine mit aufgesetztem Rührwerk vermischt, bis eine optisch homogene flüssige Masse entstanden war. Die frisch vermischte, mit zusätzlichem Olivenkernmehl verfüllte Beschichtung wurde anschliessend mit einer Gummirakel in einer Menge von 840 g/m² auf einer Fläche von 5 m² eines Estrichmörtel-Bodens in einer Industriehalle verteilt und im Normklima aushärten gelassen.

### Beispiel 2:

3.8 kg Harz-Komponente und 1.2 kg Härter-Komponente der Beschichtung **E1** wurden zusammen mit 1.5 kg Olivenkernmehl 0.1-0.3 mm (d⁵⁰ 0.2 mm) mittels einer Bohrmaschine mit aufgesetztem Rührwerk vermischt, bis eine optisch homogene flüssige Masse entstanden war. Die frisch vermischte, mit zusätzlichem Olivenkernmehl verfüllte Beschichtung wurde anschliessend mit einer Gummirakel in einer Menge von 1020 g/m² auf einer Fläche von 5 m² eines Estrichmörtel-Bodens in einer Industriehalle verteilt und im Normklima aushärten gelassen.

### Beispiel 3:

3.8 kg Harz-Komponente und 1.2 kg Härter-Komponente der Beschichtung **E1** wurden zusammen mit 2.0 kg Olivenkernmehl 0.1-0.3 mm (d⁵⁰ 0.2 mm) mittels einer Bohrmaschine mit aufgesetztem Rührwerk vermischt, bis eine optisch homogene flüssige Masse entstanden war. Die frisch vermischte, mit zusätzlichem Olivenkernmehl verfüllte Beschichtung wurde anschliessend mit einer Gummirakel in einer Menge von 985 g/m² auf einer Fläche von 5 m² eines Estrichmörtel-Bodens in einer Industriehalle verteilt und im Normklima aushärten gelassen.

### Beispiel 4:

3.8 kg Harz-Komponente und 1.2 kg Härter-Komponente der Beschichtung **E1** wurden zusammen mit 1.0 kg Olivenkernmehl 0.3-0.6 mm (d⁵⁰ 0.4 mm) mittels einer Bohrmaschine mit aufgesetztem Rührwerk vermischt, bis eine optisch homogene flüssige Masse entstanden war. Die frisch vermischte, mit zusätzlichem Olivenkernmehl verfüllte Beschichtung wurde anschliessend mit einer Gummirakel in einer Menge von 980 g/m² auf einer Fläche von 5 m² eines Estrichmörtel-Bodens in einer Industriehalle verteilt und im Normklima aushärten gelassen.

### Vergleichsbeispiel 1:

3.8 kg Harz-Komponente und 1.2 kg Härter-Komponente der Beschichtung **E1** wurden zusammen mit 2.0 kg Quarzmehl 0.1-0.3 mm mittels einer Bohrmaschine mit aufgesetztem Rührwerk vermischt, bis eine optisch homogene flüssige Masse entstanden war. Die frisch vermischte, mit zusätzlichem Quarzmehl verfüllte Beschichtung wurde anschliessend mit einer Gummirakel in einer Menge von 944 g/m² auf einer Fläche von 5 m² eines Estrichmörtel-Bodens in einer Industriehalle verteilt und im Normklima aushärten gelassen.

### Vergleichsbeispiel 2:

3.8 kg Harz-Komponente und 1.2 kg Härter-Komponente der Beschichtung **E1** wurden zusammen mit 3.0 kg Quarzmehl 0.1-0.3 mm mittels einer Bohrmaschine mit aufgesetztem Rührwerk vermischt, bis eine optisch homogene flüssige Masse entstanden war. Die frisch vermischte, mit zusätzlichem Quarzsand verfüllte Beschichtung wurde anschliessend mit einer Gummirakel in einer Menge von 1210 g/m² auf einer Fläche von 5 m² eines Estrichmörtel-Bodens in einer Industriehalle verteilt und im Normklima aushärten gelassen.

### Vergleichsbeispiel 3:

3.8 kg Harz-Komponente und 1.2 kg Härter-Komponente der Beschichtung **E1** wurden zusammen mit 1.0 kg Olivenkernmehl ≤ 0.1 mm mittels einer Bohrmaschine mit aufgesetztem Rührwerk vermischt, bis eine optisch homogene flüssige Masse entstanden war. Die frisch vermischte, mit zusätzlichem zu feinem Olivenkernmehl verfüllte Beschichtung wurde anschliessend mit einer Gummirakel in einer Menge von 910 g/m² auf einer Fläche von 5 m² eines Estrichmörtel-Bodens in einer Industriehalle verteilt und im Normklima aushärten gelassen.

Die Resultate der Beispiele 1 bis 4 und der Vergleichsbeispiele 1 bis 3 sind in Tabelle 1 angegeben.

**Tabelle 1**

| | Absetzverhalten | Fliessverhalten | Aspekt |
|---|---|---|---|
| **Beispiel 1:** | kein Absetzen im Gebinde, kein Absetzen nach der Applikation | gute Standfestigkeit, gut zum Verteilen | ebenmässige schöne Oberfläche |
| **Beispiel 2:** | kein Absetzen im Gebinde, kein Absetzen nach der Applikation | gute Standfestigkeit, gut zum Verteilen | ebenmässige schöne Oberfläche |
| **Beispiel 3:** | kein Absetzen im Gebinde, kein Absetzen nach der Applikation | hohe Viskosität, knapp genügend zum Verteilen | leicht unebene Oberfläche, nicht ganz verlaufen |
| **Beispiel 4:** | kein Absetzen im Gebinde, kein Absetzen nach der Applikation | genügende Standfestigkeit, gut zum Verteilen | körnige, schöne Oberfläche |
| **Vergleichsbeispiel 1:** | starkes Absetzen im Gebinde, etwas Absetzen nach der Applikation | ungenügende Standfestigkeit, gut zum Verteilen | inhomogene Oberfläche wegen unregelmässigem Absetzen |
| **Vergleichsbeispiel 2:** | starkes Absetzen im Gebinde, etwas Absetzen nach der Applikation | ungenügende Standfestigkeit, gut zum Verteilen | inhomogene Oberfläche wegen unregelmässigem Absetzen |
| **Vergleichsbeispiel 3:** | kein Absetzen im Gebinde, kein Absetzen nach der Applikation | sehr gute Standfestigkeit, schlecht zum Verteilen | unebene Oberfläche wegen ungenügendem Verlauf |

Aus der Tabelle 1 ist Folgendes ersichtlich:
Das Verfüllen mit Olivenkernmehl 0.1-0.3 mm (= biobasiertes Granulat **G1)** der Beispiele 1 und 2 war sehr vorteilhaft. Die Fliessgrenze der Epoxidharz-Beschichtung wurde deutlich erhöht, bei guter Verarbeitbarkeit und schöner, ebenmässiger Oberfläche nach der Aushärtung. Das Beispiel 3 war noch verarbeitbar, wobei der Verlauf nur knapp genügte. Das Beispiel 4 ergab bei guter Verarbeitbarkeit eine körnige Oberfläche. Dies kann für spezielle Anwendungen vorteilhaft sein.

Die Vergleichsbeispiele 1 und 2 zeigten ein deutliches Absetzen des Quarzmehls bei ungenügender Erhöhung der Fliessgrenze. Um den gewünschten Effekt zu erzielen, wäre ein zusätzlicher Verdicker wie beispielsweise Sika^{®} Stellmittel T (Polyethylenfasern, von Sika) notwendig.

Das Vergleichsbeispiel 3 mit zu feinem Olivenkernmehl zeigte einen ungenügenden Verlauf mit unebener Oberfläche.

### Beispiele 5 und 6:

Für die Beispiele 5 und 6 wurde in einer Industriehalle jeweils auf einer Fläche von 5 m² eines Estrichmörtel-Bodens ein Bodenschutzsystem appliziert mit dem in Tabelle 2 beschriebenen Aufbau. Die Umgebungsbedingungen bei der Verarbeitung waren 19 °C und 60% relative Feuchtigkeit. Das Entfernen des zum Abstreuen verwendeten und nicht eingebundenen Olivenkernmehls 0.3-0.8 mm erfolgte nach einer Aushärtezeit von 24 h bei 19 °C und 60% relativer Feuchtigkeit mittels Besen und Staubsauger. Anschliessend erfolgte die Applikation der Versiegelung.

Für die Prüfung auf Haftzug wurde jeweils zusätzlich eine Betonplatte (500 x 500 mm) mit dem gleichen Aufbau beschichtet. Nach einer Aushärtezeit von 14 Tagen bei ca. 19 °C und 60% relativer Feuchtigkeit wurde die Prüfung auf **Haftzug** wie folgt durchgeführt. Mit einem Diamantkernbohrer mit Durchmesser 50 mm wurde durch das Bodenschutzsystem ca. 10 mm tief ins Betonsubstrat gebohrt. Auf die Fläche innerhalb der Bohrung wurde ein Stahlzylinder mit Durchmesser 50 mm auf das Bodenschutzsystem geklebt. Anschliessend wurde der Stahlzylinder in Anlehnung an DIN EN 4624 mit einer Geschwindigkeit von 0.05 N/mm²·s bis zum Bruch senkrecht zur Oberfläche des Bodenschutzsystems gezogen und anschliessend das Bruchbild beurteilt. Ein Kohäsivbruch im Betonsubstrat zeigte, dass das Bodenschutzsystem über eine ausgezeichnete Haftung zwischen den einzelnen Schichten und auf dem Betonsubstrat verfügte.

Die Resultate sind in Tabelle 2 angegeben.

**Tabelle 2**

| | **Beispiel 5** | **Beispiel 6** |
|---|---|---|
| Aufbau | 0.66 kg/m² einer Mischung aus 3.8 kg Harz-Komponente und 1.2 kg Härter-Komponente der Beschichtung **E1,** zusätzlich verfüllt mit 1.0 kg Olivenkernmehl 0.1-0.3 mm | |
| | im Überschuss abgestreut mit 1 kg/m² Olivenkernmehl 0.3-0.8 mm, gefolgt von Entfernen von 0.3 kg/m² nicht eingebundenem Olivenkernmehl nach der Aushärtung | |
| | 0.72 kg/m² Versiegelung Sikafloor^{®} 378 (von Sika) | 0.69 kg/m² Versiegelung Sikafloor^{®} 2640 (von Sika) |
| Verarbeitbarkeit | gute Erhöhung der Fliessgrenze der Beschichtung **E1,** sehr gute Verarbeitbarkeit aller Schichten | |
| Aspekt | sehr ebenmässig strukturierte Oberfläche ohne Poren | |
| Haftzug | Kohäsivbruch im Betonsubstrat | |

## Patentansprüche

1. Methode zur Applikation eines Bodenschutzsystems, umfassend die Schritte
(i) Vermischen der Komponenten einer Epoxidharz-Beschichtung,
(ii) Zugeben von mindestens einem biobasierten Granulat **G1** zur Epoxidharz-Beschichtung während oder nach Schritt (i),
(iii) Applizieren der flüssigen Epoxidharz-Beschichtung enthaltend das biobasierte Granulat **G1** auf eine Bodenfläche,
(iv) Aushärten der applizierten Beschichtung bei Umgebungsbedingungen, insbesondere bei einer Temperatur von 0 bis 40 °C, bevorzugt 5 bis 35 °C,
wobei das biobasierte Granulat **G1** eine Partikelgrössenverteilung von 0.1 bis 1 mm und einen volumenbasierten d⁵⁰-Wert von 0.2 bis 0.8 mm aufweist, bestimmt mittels Siebanalyse nach DIN 66165 (2016).

2. Methode gemäss Anspruch 1, **dadurch gekennzeichnet, dass** das biobasierte Granulat **G1** einen Ligningehalt von mindestens 10 Gewichts-%, bevorzugt mindestens 15 Gewichts-%, insbesondere mindestens 20 Gewichts-%, aufweist.

3. Methode gemäss einem der Ansprüche 1 oder 2, **dadurch gekennzeichnet, dass** das biobasierte Granulat **G1** ausgewählt ist aus der Gruppe bestehend aus gemahlenen Olivenkernschalen, Kokosnussschalen, Mandelschalen, Walnussschalen, Pecannussschalen, Paranussschalen, Haselnussschalen, Macadamianussschalen, Cashewnussschalen, Pistazienschalen, Kakaofruchtschalen, Aprikosenkernschalen, Pfirsichkernschalen und Zwetschgenkernschalen.

4. Methode gemäss einem der Ansprüche 1 bis 3, **dadurch gekennzeichnet, dass** das biobasierte Granulat **G1** ein Granulat aus Olivenkernschalen ist.

5. Methode gemäss einem der Ansprüche 1 bis 4, **dadurch gekennzeichnet, dass** das biobasierte Granulat **G1** eine Partikelgrössenverteilung von 0.1 bis 0.5 mm und einen volumenbasierten d⁵⁰-Wert von 0.2 bis 0.4 mm aufweist.

6. Methode gemäss einem der Ansprüche 1 bis 5, **dadurch gekennzeichnet, dass** bezogen auf 100 Gewichtsteile Epoxidharz-Beschichtung 10 bis 40 Gewichtsteile, bevorzugt 15 bis 30 Gewichtsteile, biobasiertes Granulat **G1** zugegeben wird.

7. Methode gemäss einem der Ansprüche 1 bis 6, **dadurch gekennzeichnet, dass** die Epoxidharz-Beschichtung eine Harz-Komponente und eine Härter-Komponente umfasst, welche jeweils getrennt voneinander lagerstabil sind und für die Applikation in Schritt (i) miteinander vermischt werden.

8. Methode gemäss Anspruch 7, **dadurch gekennzeichnet, dass** die Harz-Komponente mindestens ein Epoxid-Flüssigharz enthält.

9. Methode gemäss einem der Ansprüche 7 oder 8, **dadurch gekennzeichnet, dass** die Härter-Komponente mindestens ein Polyamin mit mindestens drei Aminwasserstoffen enthält.

10. Methode gemäss einem der Ansprüche 1 bis 9, **dadurch gekennzeichnet, dass** die Epoxidharz-Beschichtung enthaltend das biobasierte Granulat **G1** in Schritt (iii) eine Viskosität bei 20 °C von 0.5 bis 25 Pa·s, bevorzugt 1 bis 10 Pa·s, aufweist, gemessen mittels Platte-Platte Viskosimeter mit Plattendurchmesser 50 mm, Platte-Platte-Abstand 0.5 mm und Scherrate 100 s⁻¹.

11. Methode gemäss einem der Ansprüche 1 bis 10, **dadurch gekennzeichnet, dass** in Schritt (iii) eine Menge von 0.2 bis 3 kg/m², bevorzugt 0.3 bis 2 kg/m², appliziert wird.

12. Methode gemäss einem der Ansprüche 1 bis 11, **dadurch gekennzeichnet, dass** die in Schritt (iii) applizierte Beschichtung im noch flüssigen Zustand mit mindestens einem weiteren Granulat abgestreut wird.

13. Methode gemäss einem der Ansprüche 1 bis 12, **dadurch gekennzeichnet, dass** die in Schritt (iv) erhaltene ausgehärtete Beschichtung mit mindestens einer weiteren Epoxidharz-Beschichtung überbeschichtet wird, insbesondere mit einer Epoxidharz-Versiegelung.

14. Bodenschutzsystem erhalten aus der Methode gemäss einem der Ansprüche 1 bis 13.

15. Verwendung des Bodenschutzsystems gemäss Anspruch 14 auf Brücken, Rampen, Treppen, Terrassen, Balkonen oder Parkdecks, oder in Garagen, Parkhäusern, Industriehallen oder Lagerhallen.
